# EUROPÄISCHE PATENTSCHRIFT

(11) **EP 3 298 371 B1**
(45) Veröffentlichungstag und Bekanntmachung des Hinweises auf die Patenterteilung: **13.02.2019**
(21) Anmeldenummer: 16747437.8
(22) Anmeldetag: 09.07.2016
(51) Int. Cl.: G01L 1/18, G01L 1/20, G01L 1/26

(54) **VERFAHREN UND EINRICHTUNG ZUR ELEKTRISCHEN KRAFTMESSUNG MITTELS ISOLATIONSDÜNNSCHICHT**
METHOD AND DEVICE FOR ELECTRICAL FORCE MEASUREMENT BY MEANS OF AN INSULATING THIN LAYER
PROCÉDÉ ET DISPOSITIF DE MESURE ÉLECTRIQUE DE FORCE AU MOYEN D'UNE COUCHE MINCE ISOLANTE

(30) Priorität: 14.07.2015 DE 102015111425
(43) Veröffentlichungstag der Anmeldung: 28.03.2018
(73) Patentinhaber: Klemm, Jan, 36419 Geisa-Borsch (DE)
(72) Erfinder: Klemm, Jan, 36419 Geisa-Borsch (DE)
(74) Vertreter: Engel, Christoph Klaus
(86) Internationale Anmeldenummer: PCT/DE2016/100305
(87) Internationale Veröffentlichungsnummer: WO 2017/008784

(56) Entgegenhaltungen:
- DE-A1- 10 253 178
- DE-A1-102010 024 808
- US-A1- 2003 164 047

## Beschreibung

Die Erfindung betrifft eine Einrichtung zum elektrischen Messen einer Kraft, die zwischen mindestens 2 Metallelektroden aufgebaut wird, wobei mindestens eine Isolationsdünnschicht als Sensorelement wirkt, deren elektrische Leitfähigkeit eine eindeutige und exakt rückführbare Funktion der einwirkenden Kraft beschreibt.

Generell betrifft die Erfindung das Gebiet der Kraftmesstechnik, wobei gegenüber dem Stand der Technik eine neuartige Anwendungsvielfalt erreicht wird, indem ein vereinfachter Aufbau der Kraftsensoren ohne Verformungskörper geschaffen wird. Hierbei kommt als Gestaltungsmerkmal die Aufbringung von mindestens einer oder mehrerer homogener Isolationsdünnschichten auf den planaren oder Freiformflächen der mechanischen Kraftübertragungselemente zum Einsatz, so dass zwischen den elektrisch isolierten Kraftübertragungselementen und Metallelektroden ein Sensoraufbau möglich wird, der direkt und ohne nennenswerte Verformung dieser Elemente ein elektrisches Signal in Form einer kraftabhängigen Spannungsänderung bei gegebenem Strom erzeugt, das die eineindeutige hochauflösende und stetige Abbildung zur einwirkenden Kraft auf direktem mechanischen und elektrischen Weg beschreibt.

Durch diese Technologie wird die Schaffung von Sensoren mit hoher Temperaturfestigkeit, je nach gewählter Isolationsdünnschicht, und in miniaturisierter Bauweise, d.h. im Bauraum von unter einem Kubikmillimeter für die Kraftmessung im Milli-Newton-Bereich und weiterhin in beliebig großer Makrobauweise im Newton- bis Mega-Newton-Bereich möglich, wobei je nach Messaufgabe eine beliebige geometrische Gestaltung der mechanischen Kraftübertragungselemente mit aufgebrachten Isolationsdünnschichten eine freie Wahl hinsichtlich Bauraum, Kraftwirkrichtung und mechanischer Übersetzungsverhältnisse erreicht wird.

Beispielsweise wird durch die freie Wahl der Kegelsteilheit von Innen- und Außenkegelstumpf, auf dessen Außenkegelmantelfläche eine Isolationsdünnschicht aufgebracht wurde, eine freie konstruktive Wahl der zu erreichenden Messempfindlichkeit möglich, wobei je nach geometrischer Gestaltung ein Zug- oder Drucksensor möglich wird. Ein weiterer Freiheitsgrad bei der mechanischen und elektrischen Gestaltung der Kraftsensoren ist die Werkstoffauswahl, der Aufbau und die chemische Zusammensetzung der Isolationsdünnschicht bzw. des Schichtsystems, die auf den Kraftübertragungselementen aufgebracht wird, wobei die Temperaturfestigkeit, die Messempfindlichkeit der Isolationsdünnschicht je nach Anforderung der Messaufgabe frei wählbar ist. Auch die Gestaltung von miniaturisierten und größeren Kombinationen mehrerer Kraftsensoren mittels Isolationsdünnschichten in der Ausführung einer kombinierten Sensoreinheit wird möglich, um beispielsweise wechselwirkungsfrei die Kraftwirkung und Kraftrichtung hinsichtlich der 3 Raumdimensionen Breite (x-Komponente), Länge (y-Komponente), Tiefe (z-Komponente) im Raum zu erfassen.

Generell ist aus dem Stand der Technik und ersten Veröffentlichungen, die bereits um 1920 bekannt wurden, der piezoresistive Effekt hinreichend bekannt. Der piezoresistive Effekt beschreibt eine elektrische Widerstandsänderung des Materials durch hohe äußere Kraft- bzw. Druckeinwirkung. Bei allen Materialien, die geringfügig bis stark elektrisch leitend sind, tritt dieser Effekt auf, jedoch ist die Druckempfindlichkeit von Halbleitern gegenüber Metallen um ein Vielfaches höher. Grundsätzlich ist festzustellen, dass diese Druckempfindlichkeit bezogen auf die Widerstandsänderung durch äußere Krafteinwirkung gesteigert werden kann, indem bei Halbleitern die Orientierung des Einkristalls, das bedeutet die elektrische Stromflussrichtung, und die Dotierung mit Fremdatomen im Trägermaterial gezielt angepasst wird.

Zu beobachten ist der piezoresistive Effekt auch am Beispiel von amorphen Kohlenstoffschichten, mit einer diamantähnlichen Gitterstruktur, wie sie im Patent DE 199 54 164 B4 beschrieben ist, wobei festzustellen ist, dass die Stärke des piezoresistiven Effekts nicht nur bei amorphen Kohlenstoffschichten durch gezielte chemische Zusammensetzung und Gestaltung der Gitterstruktur beeinflusst werden kann, sondern ebenfalls wird bei anderen Dünnschichten bzw. Mehrlagen-Schichtsystemen, den so genannten Multi-Layer-Schichten, wie sie beispielsweise Aluminium-Titan-Nitrit, Aluminium-Chrom-Nitrit, Zirkonium-Oxid-Nitrit oder Aluminium-Chrom-Nitrit-Oxid und viele weitere sein können, durch die Einbindung von Fremdatomen bzw. Molekülstrukturen als Körner in einer Nanokomposit-Trägerschicht eine hohe Stärkung des piezoresistiven Effekts erreicht. Das heißt, die Empfindlichkeit der elektrischen Widerstandsänderung gegenüber dem Maß der von außen mechanisch einwirkenden Kraft oder Druck wird sehr stark erhöht, da je nach Materialkombination und eingebrachten Störstellen in den Halbleitern druckabhängig zusätzliche Ladungsträger in Form von Ionen und / oder Elektronen freigesetzt werden. Dieser Effekt ist schon seit 1920 bekannt, jedoch bringt der technische Fortschritt und die Weiterentwicklung zur Anwendung und Herstellung von Schichtsystemen neuartige Werkstoffkombinationen und Schichtsysteme hervor, die einerseits auf verschiedensten Materialien wie beispielsweise Metall-, Keramik-, Glas- oder Kunststoffoberflächen aufzubringen sind und andererseits eine Materialzusammensetzung aufweisen, die hinsichtlich der elektrischen Eigenschaften den Halbleitern sehr nahe kommen.

Jedoch weisen solche piezoresistiven Schichten eine sehr starke temperaturabhängige Drift des Widerstandes auf, der als relative temperaturabhängige Widerstandsänderung im Bereich von -0.4 Prozent bis etwa -1.2 Prozent per Kelvin Temperaturerhöhung liegt, wie es ebenfalls im Stand der Technik beschrieben ist. Solche Schichten und Strukturen gestatten beispielsweise die Gestaltung von diskreten elektronischen Bauteilen und Schaltungen auf planaren Trägermaterialien, beispielsweise Glas, wie sie bei der Herstellung moderner Flachbildschirme zur Anwendung kommen. Ebenfalls zeichnen sich solche beschichteten Oberflächen durch eine extreme mechanische Festigkeit oberhalb der Hartmetalle aus, mit über 2 Gigapascal Druckfestigkeit und einer Temperaturfestigkeit im Bereich von minus 100 Grad Celsius bis hin zu 1200 Grad Celsius, je nach Auswahl des Trägerkörpers und des aufgebrachten Schichtsystems.

Die DE 10 2010 024 808 A1 beschreibt einen Sensoraufbau, mit einer piezoresistiven Kohlenstoffdünnschicht mit strukturierter Anordnung und einer Messelektronik. Es kommen ausschließlich Kohlenstoffschichten (DLC - dimond like carbon) zum Einsatz. Solche Schichten sind sehr niederohmig. Die piezoelektrische Funktionsschicht ist strukturiert, was einen hohen Fertigungsaufwand für die Erstellung der Krafteintrittsflächen zur Folge hat. Zusätzlich ist die Funktionsschicht aus DLC mit einer Verschleißschutzschicht beschichtet, die elektrische Störgrößen in der Messanordnung hervorrufen kann. Die US 2003/0164047 A1 beschreibt einen Kraftsensor mit einem Krafterfassungselement und einem Temperaturkompensationselement, wobei diese beiden Elemente aus demselben Material gefertigt sind und dieselben Dimensionen aufweisen.

Die DE 102 53 178 A1 beschreibt die Verwendung einer Schicht aus diamantartigem Kohlenstoff als Temperatursensor, der bevorzugt in tribologisch beanspruchten Bereichen von Maschinen eingesetzt wird. Weiterhin wird die Möglichkeit einer gleichzeitigen Druck- und Temperaturmessung in örtlich unterschiedlichen Schichtbereichen erwähnt.

Die aufgezeigten Nachteile des eingangs erwähnten Stands der Technik werden durch die Erfindung gemäß Anspruch 1 zumindest teilweise überwunden.

### Anlagenverzeichnis

- Figur 1:: Schnittdarstellung der Isolationsdünnschicht-Kraftmesszelle mit Referenzisolationsdünnschicht zur Temperaturkompensation als elektrische Halbmessbrücke.
- Figur 2:: Schnittdarstellung der Isolationsdünnschicht-Kraftmesszelle mit Referenzdünnschicht zur Temperaturkompensation als Widerstandsmessung.
- Figur 3:: Schnittdarstellung der Isolationsdünnschicht-Kraftmesszelle mit Referenzisolationsdünnschicht zur Temperaturkompensation in doppelter Ausführung als hochempfindliche Vollmessbrücke.
- Figur 4:: Schnittdarstellung der Isolationsdünnschicht-Kraftmesszelle zur gleichseitigen Erfassung zweier Kraftrichtungen F_x und F y mit Referenzisolationsdünnschicht zur Temperaturkompensation als elektrische mehrkanalige Widerstandsmessung.

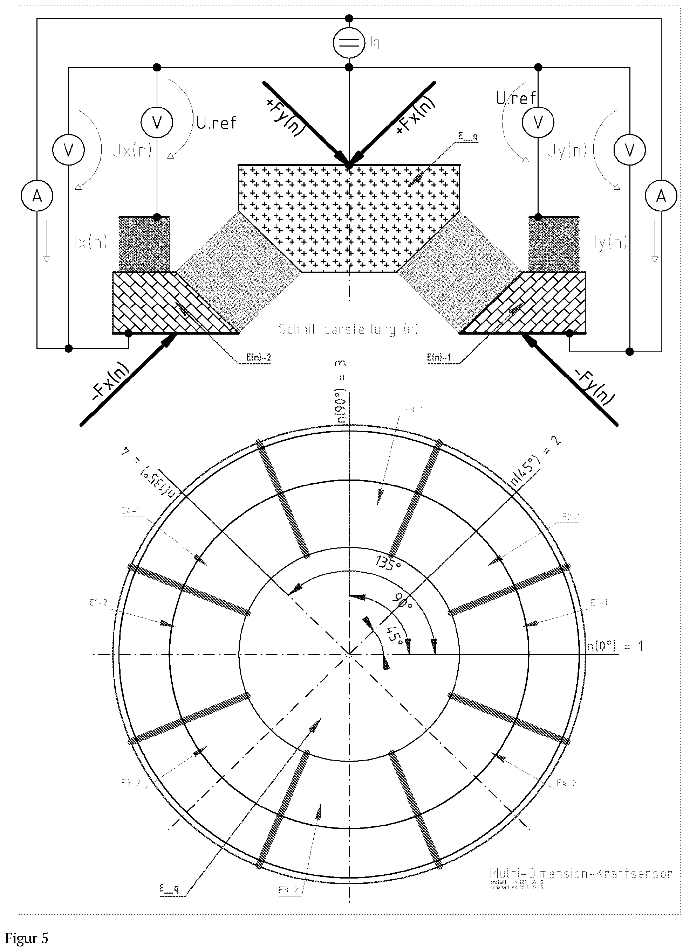

- Figur 5:: Aufbau und Messschaltung eines N-dimensionalen Isolationsdünnschicht-Kraftsensors mit n-facher Messschaltung mit mehrkanaliger Referenzisolationsdünnschicht zur Temperaturkompensation; Oben - Schnittdarstellung eines 2D-Isolationsschichtsensor-Segmentes; Unten - Rotatorische Segmentanordnung als Ausführungsbeispiel bestehend aus n=4 mal 2D- Sensorblöcken und 4x2=8 Messkanälen, um die Kraftrichtung und deren Betrag komponentenbezogen zu messen. Legende: El-1 und El-2: Elektrodenpaar Fy+Fx Drehwinkel 0°; E2-1 und E2-2: Elektrodenpaar Fy+Fx Drehwinkel 45°; E3-1 und E3-2: Elektrodenpaar Fy+Fx Drehwinkel 90°; E4-1 und E4-2: Elektrodenpaar Fy+Fx Drehwinkel 135°.

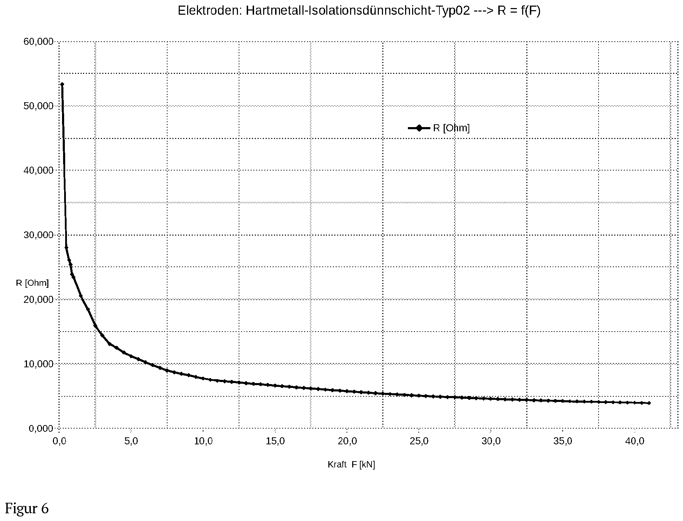

- Figur 6:: Kraft-Widerstandskennlinie der Isolationsdünnschichtmesszelle bestehend aus einer unbeschichteten Hartmetallelektrode und einer beschichteten Hartmetallelektrode vom Typ_01 .

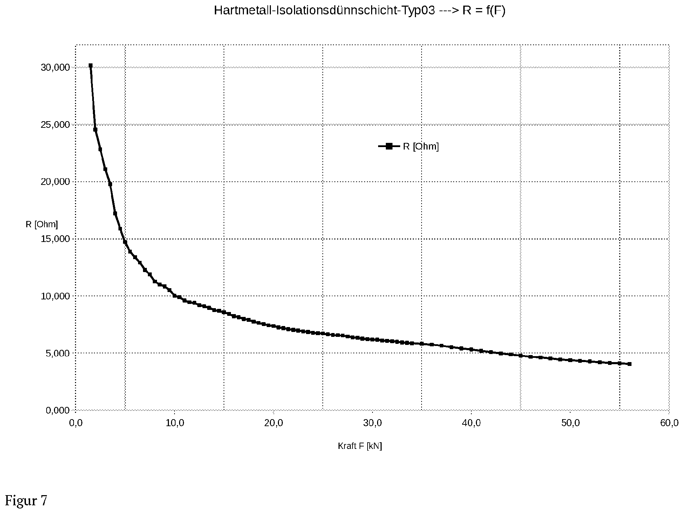

- Figur 7:: Kraft-Widerstandskennlinie der Isolationsdünnschichtmesszelle bestehend aus einer unbeschichteten Hartmetallelektrode und einer beschichteten Hartmetallelektrode vom Typ_03.

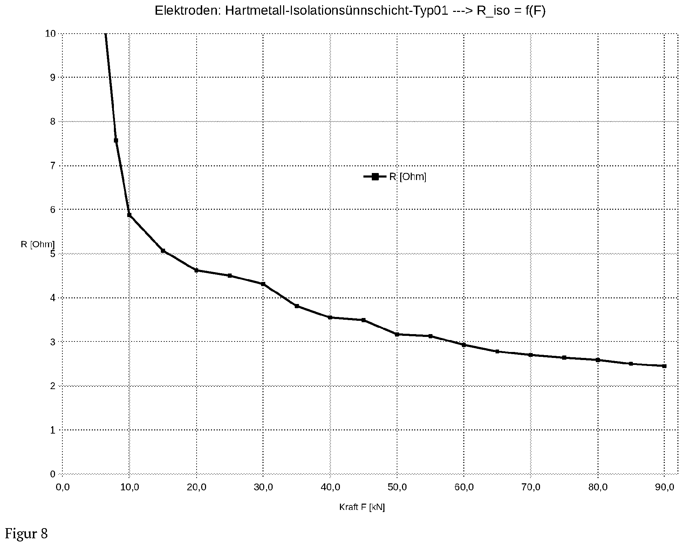

- Figur 8:: Kraft-Widerstandskennlinie der Isolationsdünnschichtmesszelle bestehend aus einer unbeschichteten Hartmetallelektrode und einer beschichteten Hartmetallelektrode vom Typ_01.

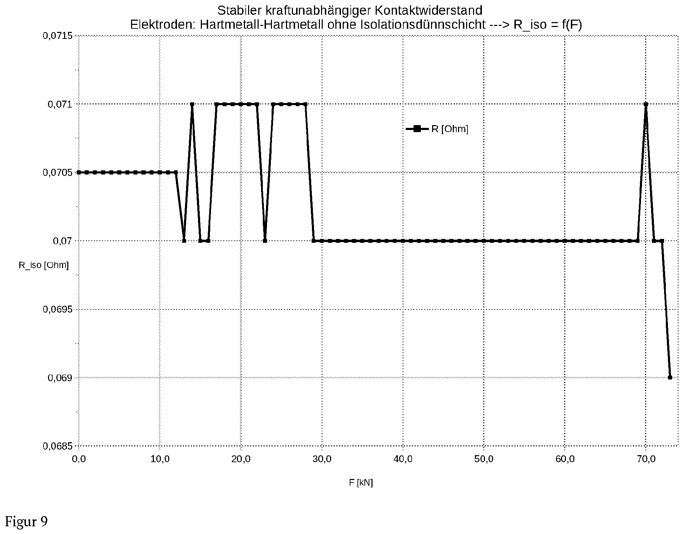

- Figur 9:: Kraft-Widerstandskennlinie der Isolationsdünnschichtmesszelle bestehend aus zwei unbeschichteten Hartmetallelektroden, d.h. der Widerstand zwischen den Kontaktflächen liegt im unteren Milliohmbereich bei +/- 1 mOhm.

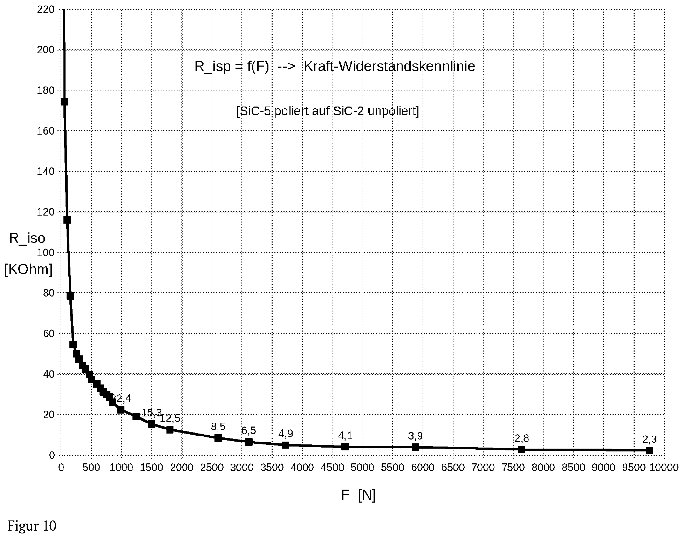

- Figur 10:: Kraft-Widerstandskennlinie der Isolationsdünnschichtmesszelle bestehend aus zwei unbeschichteten Hartmetallelektroden, d.h. der Widerstand zwischen den Kontaktflächen liegt im unteren Milliohmbereich bei +/- 1 mOhm.

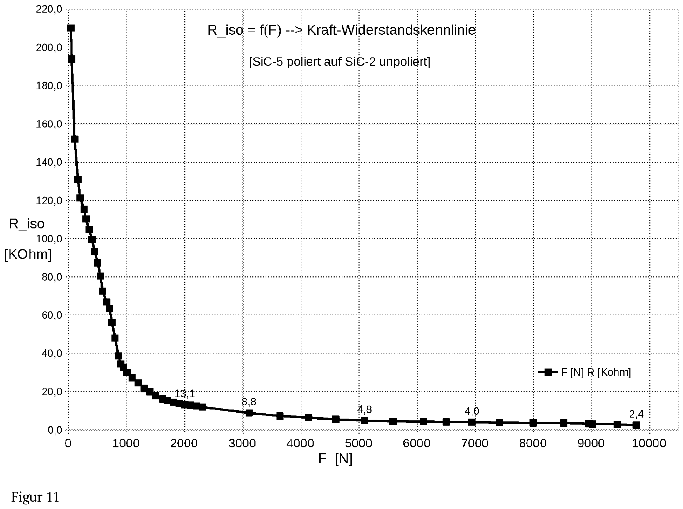

- Figur 11:: Kraft-Widerstandskennlinie der Isolationsdünnschichtmesszelle bestehend aus zwei beschichteten Hartmetallelektroden unterschiedlicher Rauheit [SiC_05 poliert auf SiC_03 unpoliert]

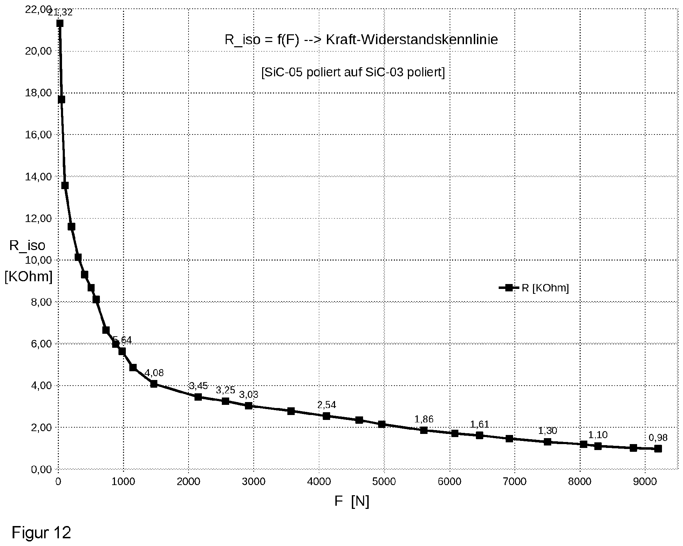

- Figur 12:: Kraft-Widerstandskennlinie der Isolationsdünnschichtmesszelle bestehend aus zwei beschichteten Hartmetallelektroden unterschiedlicher Rauheit [SiC_05 poliert auf SiC_03 unpoliert]

Die Erfindung betrifft im Allgemeinen eine Einrichtung zum elektrischen Messen einer Kraft F, die mindestens zwischen zwei zusammengepressten Metallelektroden 1 und Metallelektrode 3 wirkt. Die Metallelektroden sind aus Hartmetall, Stahl oder niederohmigen Metallschichten auf Keramik-, Glas- oder Kunststoffkörpern mit einem elektrischen Widerstand im Bereich weniger Milliohm bis kleiner gleich zehn Ohm und mit einer mittleren Rautiefe Ra kleiner gleich 400 Nanometer und besitzen eine kraftunabhängige Leitfähigkeit an den Kontaktflächen. Die Kraft wirkt direkt auf eine Isolationsdünnschicht 2 oder eine Mehrlagenisolationsdünnschicht 2, die zwischen einer Metallelektrode 1 und einer Metallelektrode 3 formschlüssig angeordnet ist, die aus Zinkoxid oder stochastisch reduziertem Aluminumoxid Al₂Oₓ, wobei x=2.4 bis x=2.8 oder Siliziumkarbid oder DLC-Schicht [diamond like carbon] besteht, bei geringster relativer Verformung im Bereich gleich, kleiner 0,1 Promille der Metallelektrode 1 und Metallelektrode 3. Eine Referenzmetallelektrode 4, die unabhängig vom zu messenden Kraftfluss angeordnet ist und unter konstanter Haltekraft eines Befestigungselementes 5 fixiert ist, wirkt durch die baugleiche Isolationsdünnschicht 2 oder die Mehrlagenisolationsdünnschicht 2 mit exakt gleichem physikalischen Verhalten elektrisch auf die Metallelektrode 3, so dass dieser Referenzwiderstand der Isolationsdünnschicht zwischen Metallelektrode 3 und Metallelektrode 4 unter konstanter Andruckkraft zur vollständigen Temperaturkompensation der Messanordnung als Halbbrücke oder Vollbrücke angewendet wird, indem auf dem Strompfad in Reihenschaltung über die Metallelektrode 1 über die Isolationsdünnschicht 2 nach Metallelektrode 3 über die Isolationsdünnschicht 2 nach Metallelektrode 4 ein definierter Strom einer hochpräzisen Stromquelle 6 fließt, so dass über der Isolationsdünnschicht zwischen der Metallelektrode 1 und der Metallelektrode 3 eine kraftabhängige Spannung 8 und zwischen der Metallelektrode 3 und Metallelektrode 4 einer referenzierenden Isolationsdünnschicht 2 eine Referenzspannung 9 abfällt, deren Spannungsverhältnis temperaturunabhängig ist, wobei die resultierende Brückenspannung der Messbrücke oder das direkt gemessene Spannungsverhältnis eine stetige, hochauflösende und exakt beschreibare und wiederholbare Funktion zur einwirkenden Kraft unabhängig von der Betriebstemperatur der Einrichtung zum elektrischen Messen einer Kraft definiert, wobei das temperaturkompensierte Spannungsverhältnis oder die gemessene Brückenspannung direkt einer Signalaufbereitungs- und -auswerteeinheit über eine elektrische Verbindung zugeführt werden, so dass ein elektrisch entkoppelter und mechanisch robuster Aufbau der erfindungsgemäßen Kraftmesseinrichtung erreicht wird. Eine Geometrie der Metallelektroden 1 , 2 und 3 ist frei wählbar in Form planarer Flächen oder Freiformflächen.

Eine Ausführungsform der Einrichtung zeichnet sich dadurch aus, dass bei der Herstellung der Kontaktflächen der mindestens zwei Metallelektroden einer mittleren Oberflächenrauheit Ra kleiner gleich 400 Nanometer ein Formschluss im Bereich kleiner 4 Mikrometer über die gesamte Kontaktfläche erreicht wird, wodurch der elektrische Widerstand zwischen den Kontaktflächen der mindestens zwei oder mehreren Metallelektroden 1 und Metallelektroden 3 und Metallelektroden 4 ohne Isolationsdünnschicht, die beispielsweise aus Hartmetall oder sehr festem Stahl, oder Metallpulverspritzguss, oder niederohmigen Metallschichten auf Keramik-, Glas- oder Kunststoffkörpern mit einem elektrischen Widerstand im Bereich weniger Milliohm bis kleiner gleich zehn Ohm gefertigt sind, unabhängig von der einwirkenden Kraft, unter der diese Metallkörper zusammengepresst werden, konstant bleibt innerhalb des Toleranzbandes von plus minus 3 Milliohm und sich je nach verwendetem Metall und Flächeninhalt der Kontaktfläche im Bereich zwischen 20 Milliohm bis maximal 160 Milliohm einstellt, wodurch die messtechnische Voraussetzung geschaffen wird, dass ausschließlich die Isolationsdünnschicht 2 eine kraftabhängige Widerstandsänderung nachweist.

Eine Ausführungsform der Einrichtung zeichnet sich dadurch aus, dass die Isolationsdünnschicht 2 auf Hartmetallelektroden, Stahlelektroden oder Metallschichtelelektroden auf Keramik, Glas- oder Kunststoffkörpern mit einem elektrischen Widerstand im Bereich weniger Milliohm bis kleiner gleich zehn Ohm aufgebracht ist, so dass der Elektrodengrundkörper von Metallelektrode 1 und Metallelektrode 3 und Metallelektrode 4 mindestens eine gleiche oder größere Festigkeit als die Isolationsdünnschicht 2 aufweist, wodurch die Deformation und Beschädigung der Isolationsdünnschicht gegenüber dem Trägermaterial durch Einpressen oder Abplatzen vermieden wird, und dass die Messanordnung durch die Krafteinwirkung nicht oder extrem gering, das heißt bei einer relativen Verformung kleiner 0,1 Promille, verformt werden, so dass das gesamte Kraftmesssystem ohne Wegänderung aufgrund von Verformungen der mechanischen Metallelektroden 1 , der Metallelektroden 3 und Metallelektroden 4 arbeitet und somit die Krafteinwirkung auf die Isolationsdünnschicht in eine direkte Widerstandsänderung überführt wird, welche eine eindeutige, hochauflösende und stetige Funktion der Kraft ist.

Eine Ausführungsform der Einrichtung zeichnet sich dadurch, dass die mechanischen Übertragungselemente als Metallelektroden 1 , Metallelektroden 3 und Metallelektroden 4 zur Kraftweiterleitung zwischen der äußeren Kraftwirkstelle zur Isolationsdünnschicht 2 der Kraftmesseinrichtung und ReferenzIsolationsdünnschicht 2, die zwischen den Metallelektroden 3 und Metallelektroden 4 angeordnet ist, aus hochfesten Stählen oder Hartmetallen, Metallpulverspritzguss, Keramik- oder Glaswerkstoffen mit Aufbringung spezieller, hochfester Schichten beziehungsweise Schichtsysteme gefertigt sind, die aus Siliziumkarbid, DLC [diamond like carbon], Zinkoxid oder stochastisch reduziertem Aluminiumoxid Al₂Oₓ mit einem Sauerstoffverhältnis von x gleich größer 2.4 bis 2.8 bestehen, wodurch eine sehr hohe mechanische und chemische Robustheit, Formstabilität und Verschleißfreiheit der Elemente der Messzelle, bestehend aus den Metallelektroden 1, Metallelektroden 3 und Metallelektroden 4 und der Isolationsdünnschicht 2, erreicht wird, und diese einer thermischen Belastung der Isolationsdünnschicht 2 und der elektrischen Kontaktierung zur elektronischen Messauswerteschaltung der Komponenten (6, 7, bis 17) in der Nähe der Messeinrichtung mit einem räumlichen Abstand kleiner gleich 200 Millimeter standhält, so dass die Messanordnung im Temperaturbereich von unter -80° C bis +300° C betrieben wird, wobei weit mehr als hunderttausend Schaltspiele keine Veränderung der eindeutigen Kraft-Widerstandsfunktion der Isolationsdünnschicht 2 oder Mehrlagenisolationsdünnschicht 2 bewirkt.

Eine Ausführungsform der Einrichtung zeichnet sich dadurch aus, dass die Kraftmesszelle bestehend aus den Metallelektroden 1 , Metallelektroden 3 und Metallelektroden 4 und mindestens einer Isolationsdünnschicht 2 als Hochtemperaturanwendungen im Temperaturbereich von -80°C bis +1 100°C, im Einzelfall bis +1200°C realisiert werden durch die Verwendung einer temperaturbeständigen elektrischen Verbindung zwischen Isolationsdünnschicht 2 und elektronischer Auswerteeinheit der Komponenten (6, 7 bis 17), wobei metallischer Leiter und Isolator und Kontaktflächen des Verbindungssystems temperaturbeständig bis 1200 °C sind mit Leitungslängen größer 20 Milimeter bis 5 Meter durch die gezielte Auswahl des Isolationsschichtsystems 2 [SiC, Al₂Oₓ, ZnO].

Eine Ausführungsform der Einrichtung, die in miniaturisierter und kompakter Bauweise zum elektrischen Messen einer Kraft F im Milli- bis Meganewtonbereich gestaltet ist, zeichnet sich dadurch aus, dass ein sehr robuster und dynamisch belastbarer Aufbau des Kraftmesssystems erreicht wird durch die mechanische Konstruktion der Metallelektroden 1 der Metallelektroden 3 und Metallelektroden 4, wobei die mittlere Rautiefe Ra der Metallelektrodenkontaktflächen 1 und Metallelektrodenkontaktflächen 4 im Verhältnis 30:1 bis 2: 1 rauer sind gegenüber der mittleren Rautiefe der Metallelektroden 3 von Ra gleich kleiner 200 Nanometer, wodurch gezielt der Anstieg der stetigen Kraft-Widerstandskennlinie der Messzelle anwendungsspezifisch festgelegt wird, indem ein Rauheitsverhältnis 1 :1 der Elektroden einen wesentlich geringeren Anstieg der Kraft-Widerstandskennlinie hervorbringt, gegenüber einem höheren Verhältnis von X:1 bei X = 1.5 bis 30.0, das einen wesentlich steileren Anstieg der Kraft-Widerstandskennlinie bewirkt. Weiterhin erfolgt die Gestaltung der Metallelektrodenkontaktfläche als Formteil, wobei Planarflächen oder Freiformflächen zur Anwendung kommen mit definierter Oberflächenrauheit, die die Haftfestigkeit der hochfesten Beschichtungen an den Kraftübertragungsflächen erhöht, wodurch eine Festigkeit der Isolationsdünnschicht 2 oder der Mehrlagen-Isolationsdünnschicht 2 und der Grundkörper der Metallelektrode 1 , der Metallelektrode 3 und Metallelektrode 4 der Druckbelastbarkeit von Hartmetallen bis 2 Gigapascal oder sehr festen Stählen bis 1,2 Gigapascal erreicht wird. Durch die Auswahl des Herstellungsverfahrens der Isolationsdünnschicht 2 hinsichtlich Werkstoffauswahl und Werkstoffbehandlung mit verfügbaren Beschichtungstechniken werden spezielle Widerstandskennwerte oder Arbeitsbereiche des kraftabhängigen Isolationsverhaltens im Milliohm-, Ohm- bis mehrere hundert Kiloohm-Bereich festgelegt, die in kleiner Bauweise mit einem Bauraum weniger Kubikmillimeter für den Millinewtonbereich, in mittlerer Baugröße im Bereich bis hundert Kubikzentimeter im Newton- bis Kilonewtonbereich und in großer Bauweise unterhalb eines Kubikmeters im Meganewtonbereich arbeiten.

Eine Ausführungsform der Einrichtung zeichnet sich dadurch aus, dass die Messeinrichtung der Elemente (1, 2, 3 bis 17) durch Kombination von mehreren Isolationsdünnschichten 2 oder Mehrlagenisolationsdünnschichten 2, auch Multi-Layer-Schichten genannt, elektrisch als Halb- oder Vollmessbrücke betrieben wird, so dass durch die elektrische Verschaltung gezielt die Messempfindlichkeit mehrfach gesteigert wird. Durch jeweils eine oder mehrere Referenzmetallelektroden 4 je Kraftmesszelle wird die temperaturbedingte Widerstandsabweichung vollständig kompensiert. Weiterhin ermöglicht eine räumliche Anordnung der einen Messzellenkombination bestehend aus Metallelektroden 1 und Metallelektroden 3, Isolationsdünnschichten 2 und Referenzmetallelektroden 4 in Richtung der zu messenden Kraftwirkung und eine zweite räumliche Anordnung der Elemente (1, 2, 3 und 4) der zweiten Messzellenkombination in Richtung der störenden Kraftkomponente, die beispielsweise als mechanische überlagerte Schwingung im System hervorrufen wird, den Betrieb einer Halb- bzw. Vollmessbrücke als elektrische Differenzschaltung, so dass gezielt Störsignale durch parasitäre mechanische Schwingungen reduziert oder vollständig kompensiert werden.

Eine Ausführungsform der Einrichtung zeichnet sich dadurch aus, dass die Messeinrichtung durch Kombination von mehreren Isolationsdünnschichten (2.1 entspricht Kanal eins und 2.2 entspricht Kanal zwei) oder Mehrlagenisolationsdünnschichten (2.1 , 2.2, bis 2.n), auch Multi-Layer-Schichten genannt, elektrisch als Gruppenschaltung mehrerer Messkanäle durch eine oder mehrere Halb- oder Vollmessbrücken betrieben wird, deren räumliche oder geometrische Anordnung so ausgelegt ist, dass die zu messenden Kräfte als vektorielle Größe exakt in Betrag und Richtung je zugeordnetem Messkanal zeitgleich bestimmt werden kann durch separate Erfassung der Kraftwirkung als vektorielle Komponenten in den mindestens drei Raumdimensionen des kartesischen Koordinatensystems mit Breite-X, Länge-Y, Höhe-Z und / oder zusätzlich im Polarkoordiantensystem der Drehachse um den Normalenvektor der X-Y-Ebene, der Z-Achse und einer weiteren Drehachse, die den Neigungswinkel gegenüber X-Y-Ebene eineindeutig beschreiben.

Eine Ausführungsform der Einrichtung zeichnet sich dadurch aus, dass sowohl einfache wie auch komplexe mechanische Konstruktionen der Elemente Metallelektroden 1, Isolationsdünnschichten 2, Metallelektroden 3 und Referenzmetallelektroden 4 als elektrische Kraftmesseinrichtung erschaffen werden, die mittels Isolationsdünnschichten 2 als Kombination einer oder mehrerer elektrischer Kraftmesseinrichtungen aufgebaut werden, bestehend aus Einfach- (2) oder Mehrlagenschichten (2 bzw. 2.n), auch Multi-Layer-Schichten genannt, die auf einigen wenigen Formteilen als Plan- oder Freiformflächen aufgebracht werden in Makrobauweise, d.h. im Bereich größer 10 mm wie auch als Miniaturisierung in Mikrobauweise, d.h. im Submillimeterbereich, wobei mehrere Metall- und / oder Keramik- oder Glasbauteile kraftschlüssig und / oder formschlüssig angeordnet sind und Momente wie auch Kräfte temperaturkompensiert erfassen, wobei durch Aufbringung hochohmiger Isolationsschichten im Megaohmbereich diese Bauteile gegenüber der äußern Umgebung elektrisch hochohmig isoliert und elektrisch gegeneinander ausreichend isoliert und mechanisch wie auch elektrisch wechselwirkungsfrei gegeneinander entkoppelt als Metallelektroden 1, 3 und 4 betrieben werden.

Eine Ausführungsform der Einrichtung zeichnet sich dadurch aus, dass die Festlegung der Messempfindlichkeit der elektrischen Kraftmesseinrichtung definiert wird bezüglich des Kraftmessbereiches im Millinewton- bis Meganewtonbereich, und dass weiterhin die Kraftrichtung vorgegeben wird durch konstruktive geometrische Gestaltung der Metallelektroden 1, Metallelektroden 3 und Referenzmetallelektroden 4, indem diese als zusammensteckbare Körper frei wählbarer Regelgeometrien als Positiv- und Negativform konstruiert und gefertigt werden, deren Formabweichung kleiner gleich 6 Mikrometer bei einer mittleren Rautiefe der Elektrodenkontaktoberfläche von Ra kleiner gleich 400 Nanometer, wie beispielsweise als Innenkegelstumpf und Außenkegelstumpf formgleicher Mantelflächen zum Messen von Zug- oder Druckkräften, auf deren Mantelfläche die Isolationsdünnschicht 2 aufgebracht ist, wobei der Kegelwinkel und damit das mechanische Übersetzungsverhältnis der Druck- oder Zugmesszelle frei wählbar ist. Weiterhin wird durch ineinander gesetzte Zylinderflächen von Außen- und Innenzylinder mit aufgebrachten Isolationsdünnschichten auf der Zylindermantelfläche der Nachweis der radialen Spannkraft erreicht und somit wird das radiale und axiale Kraftübertragungsvermögen von Schrumpfverbindungen zwischen zylindrischen Spannsystemen direkt gemessen, wobei diese als Kraftwirkung zwischen beiden Körpern linear nachgewiesen wird. In einem weiteren Anwendungsbeispiel ist für die konstruktive Gestaltungsfreiheit dieses Messsystems die direkte Messung von axialen Zug- oder Druckkräften mit Hilfe von abgestuften Zylindern möglich, wobei die Isolationsdünnschicht 2 der beiden oder mehreren Formteile auf die Stirnfläche der Zylinderringe aufgebracht wird und somit wird direkt und linear die axial wirkende Zug- oder Druckkraft der angepressten Formteile linear nachgewiesen, und ebenfalls wird die direkte Messung von Drehmomenten möglich, indem durch eine Plananlagefläche zwischen den Metallelektroden 1 und Metallelektroden 3 und zwischengelagerter Isolationsdünnschicht 2, deren Normalenvektor tangential zur Drehrichtung zeigt, der ineinandergreifenden rotationssymmetrischen Formteile, wobei die Isolationsdünnschicht auf einer Planfläche oder Freiformfläche einer Welle aufgebracht ist, deren Normalenvektor in Richtung der zu messenden Kraft zeigt, die am Zylinderumfang beider Körper als Verdrehung wirkt.

Eine Ausführungsform der Einrichtung zeichnet sich dadurch aus, dass die Metallelektroden durch eine oder mehrere Isolationsdünnschichten (2 oder 2.n) elektrisch voneinander isoliert sind und mechanisch als Regelgeometrie oder Freiformgeometrie so ausgebildet sind, dass mindestens eine zwei- oder mehrkanalige gleichzeitige Messung von Druck- und Zugkräften möglich ist, indem das Aufbringen der Isolationsdünnschicht auf der Umfangsfläche von zwei miteinander verbundenen Kegelstümpfen auf der Außenfläche der jeweils inneren Elektrode durchgeführt wird, die gegenüber der passgenauen Einhausung, d.h. mit einer Oberflächenrauheit mittlerer Rautiefe kleiner 400 Nanometer und einer Formtoleranz kleiner 6 Mikrometer als zwei elektrisch voneinander isolierten äußeren Elektroden als Negativform montiert sind, wobei keine Verformung oder eine extrem geringfügige relative Verformung kleiner 0,01 Promille der beispielsweise aus Hartmetall gefertigten Metallelektroden 1, Metallelektroden 3 und Referenzmetallelektroden 4 stattfindet, und die Isolationsdünnschicht 2 auf dem Kegelstumpf mit Spitze in Richtung Kraftwirkung eine Druckkraft misst und der Kegelstumpf mit der Spitze entgegen zur Kraftwirkung misst die Zugkraft und somit diese elektrische Kraftmesseinrichtung eine Kraftmessung entgegengesetzter Kraftrichtungen als positiv und negativ wirkende Kräfte gleichzeitig ermöglicht.

Beim elektrischen Messen einer Kraft mittels der Isolationsdünnschicht 2 unter Einsatz der zuvor beschriebenen Einrichtung wird als Stromquelle 6 ein präziser elektronischer Signalgenerator eingesetzt, der entweder im Betriebsmodus als geregelte Gleichstromquelle oder weiterhin im Betriebsmodus als Wechselstromsignalquelle arbeitet, so dass klar definierte und als exakte Referenz nutzbare Ausgangsstromsignale in Form von beispielsweise Sinus-, Rechteck- oder Dreieckssignalen bei frei wählbaren Amplituden und Frequenzen der Widerstandsmessschaltung zugeführt werden. Weiterhin ist eine Signalverarbeitungs- und -auswerteschaltung auf den jeweiligen Betriebsmodus abgestimmt, so dass je nach Anwendungsfall gezielt elektrische Störgrößen aus der Umgebung, d.h. starke elektrische oder elektromagnetische Felder, gezielt mittels Signalfilterung durch Bandpass oder Bandstopp, deren Grenzfrequenzen anwendungsfallbezogen ausgelegt wurden, unterdrückt oder kompensiert werden. Ebenfalls wird im Puls-Pause-Betrieb eine Reduzierung des Energieverbrauchs einer solchen Messanordnung um mehr als 2 bis 4 Zehnerpotenzen realisiert.

Die Dynamik des Dünnschichtkraftmesssystems bestehend aus den Metallelektroden 1, den Isolationsdünnschichten 2, den Metallelektroden 3 und den Referenzmetallelektroden 4 oder der Kombination von elektrischen Kraftmesseinrichtungen mittels Isolationsdünnschichten der Elemente (1, 2, 3, und 4) liefert eine zeitliche Auflösung im Megahertz-Bereich von Kraftverläufen, die ausschließlich durch die Auslegung der Isolationsdünnschichten 2 und Referenzdünnschichten 4 als niederohmiger Messwiderstand im Bereich kleiner, gleich hundert Ohm bis ein Ohm erfolgt. Dadurch wird die Erhöhung der Messströme und im besonderen der Flankensteilheit der nachgewiesenen Messspannung, die als Spannungsabfall über dem Isolationsdünnschicht-Widerstand nachgewiesen wird, und im unteren Mikro- bis Zehner-Nanosekundenbereich erzielt. Es erfolgt die elektrische Anpassung der Messelektronik zum Erfassen der Spannungsabfälle über den Isolationsdünnschichten (2 bzw. 2n) mit einer Auflösung bis minimal dem dreistelligen Mikrovoltbereich bei einer Zeitverzögerung unterhalb achthundert Nanosekunden, so dass die Leistungsfähigkeit des gesamten Messsystems hinsichtlich des Zeitverhaltens und Empfindlichkeit ausschließlich durch diese Anpassung bestimmt wird und somit die zeitlich hochauflösende und verformungsfreie Kraftmessung möglich wird, die beispielsweise an Lagerschalen von Turbinen oder Starkstromgeneratoren durchgeführt wird.

Die mechanischen Übertragungselemente zur Kraftweiterleitung auf die Metallelektroden 1, Metallelektroden 3 und Referenzmetallelektroden 4 zwischen der äußeren Kraftwirkstelle auf die Isolationsdünnschicht 2 sind aus festen Kunststoffen oder hochfesten Verbundwerkstoffen als Formteile gefertigt, wobei das elektrische Kraftmesssystem durch die Aufbringung von hochfesten Metallschichten als elektrisch leitende Metallelektrode der Elemente (1, 3 und 4), der Aufbringung der Isolationsdünnschichten (2 bzw. 2.n) auf diesen Metallelektroden (1 , 3 und 4) und weiterhin als niederohmige elektrische Kontaktierung dieser Elektroden mit dem elektronischen Messsystem im Widerstandsbereich kleiner fünfzig Milliohm der Elemente (6, 7 bis 17) auf dem Trägermaterial der Elektrodengrundkörper aus Kunststoff oder Verbundmaterial der Metallelektroden (1 , 3 und 4) geschaffen wird.

Die Metallelektroden 1, Metallelektroden 3 und Metallelektroden 4 sind durch eine Isolationsdünnschicht 2 elektrisch voneinander isoliert, so dass die Kapazität und / oder der Widerstand dieser elektrischen Messzelle bestehend aus den Elementen (1, 2, 3 bis 17) eine eindeutige und stetige Funktion der einwirkenden Druckkraft darstellt, die von außen auf die Messzelle wirkt, wobei zum elektrischen Messen der kraftabhängigen Kapazität C oder der Impedanz Z als Stromquelle ein präziser elektronischer Signalgenerator eingesetzt wird, der als im Betriebsmodus geregelte Wechselstromsignalquelle arbeitet, so dass klar definierte und als exakte Referenz nutzbare Ausgangsstromsignale in Form von beispielsweise Sinus-, Rechteck- oder Dreieckssignalen bei frei wählbaren Amplituden und Frequenzen der Kapazitäts- oder Impedanzmessschaltung zugeführt werden und diese als Schwingkreis in der Resonanzfrequenz anregen, wobei durch die einwirkende Kraft zwischen den Metallelektroden (1, 3 und 4) der Schwingkreis durch Kapazitäts- und / oder Impedanzänderung verstimmt wird, und ebenfalls die Amplitude des Wechselspannungsmesssignals über dem kapzitiv-resistiven Widerstand der Isolationsdünnschicht 2 abnimmt, deren Verlauf eine eineindeutige und stetige Funktion gegenüber der einwirkenden Druckkraft beschreibt und die elektronische Signalverarbeitungs- und -auswerteschaltung durch anwendungsspezifische Bandstoppfilter oder Bandpassfilter die nahezu vollständige Unterdrückung oder Kompensation von Störsignalen in Folge parasitärer mechanischer Schwingungen oder elektrischer Felder aus der Umgebung umsetzt.

Die Metallelektroden 1, Metallelektroden 3 und Metallelektroden 4 sind durch eine Isolationsdünnschicht elektrisch voneinander isoliert, so dass die Impedanz Z, d.h. induktiver Wechselstromwiderstand oder kapazitiver Wechselstromwiderstand, dieser elektrischen Messzelle eine eindeutige und stetige Funktion der einwirkenden Presskraft darstellt, die von außen auf die Messzelle wirkt, wobei zum elektrischen Messen der kraftabhängigen Induktivität L oder Kapazität C als Stromquelle ein präziser elektronischer Signalgenerator eingesetzt wird, der als im Betriebsmodus geregelte Wechselstromsignalquelle arbeitet, so dass klar definierte und als exakte Referenz nutzbare Ausgangsstromsignale in Form von beispielsweise Sinus-, Rechteck- oder Dreieckssignalen bei frei wählbaren Amplituden und Frequenzen der Kapazitäts- oder Induktivitäts-Messschaltung zugeführt werden und diese als Schwingkreis in der Resonanzfrequenz anregen.

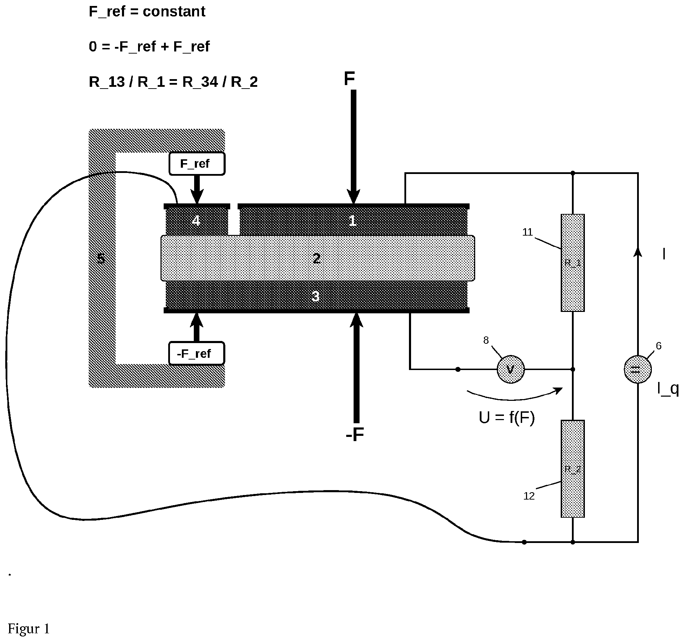

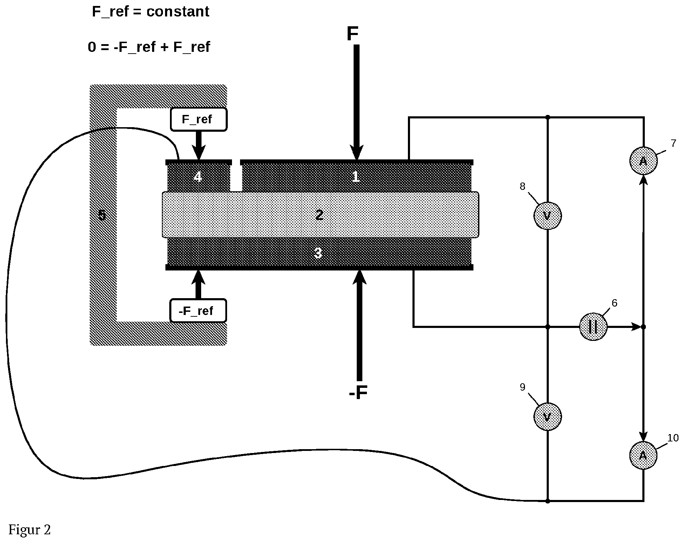

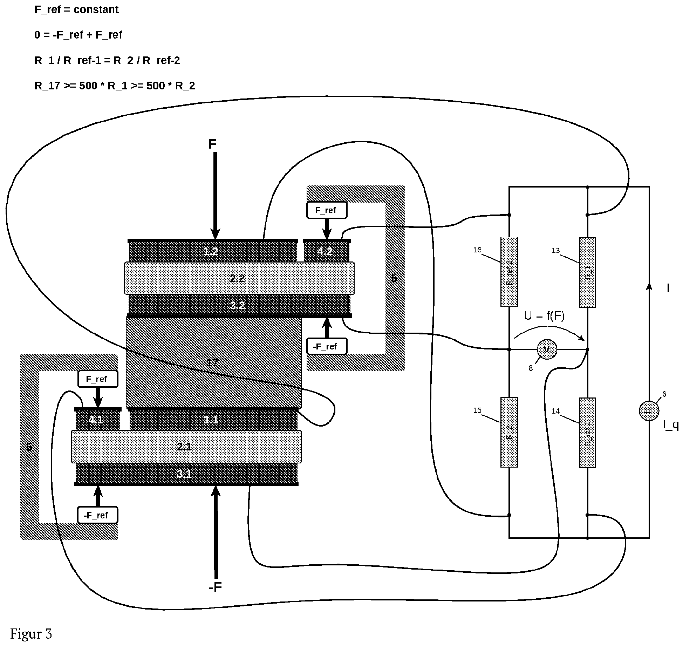

Erfindungsgemäß wird die Messung von Kräften gelöst, wie diese als Ausführungsbeispiele in Figur 1, Figur 2, und Figur 3 dargestellt sind, indem zwischen mindestens zwei mechanischen Kraftübertragungselementen (1 und 3), die als elektrisch voneinander isolierte Elektroden ausgeführt sind, eine Isolationsdünnschicht (2) aufgebracht wird, deren elektrischer Widerstand eine eindeutig rückführbare Funktion der einwirkenden Kraft F ist und das weiterhin eine Referenzmetallelektrode (4) in baulicher Nähe außerhalb des Kraftflusses angeordnet ist, deren Halterung diese Elektrode (4) unter konstanter Haltekraft gegenüber der Quellenelektrode (3) fixiert.

Somit kann eine Halb- oder Vollmessbrücke aufgebaut werden, die vollständig die Temperaturabhängigkeit der Messanordnung kompensiert, wodurch die resultierende Brückenspannung eine eineindeutig rückführbare Funktion der Kraftwirkung zwischen den Elektroden (1 und 3) beschreibt unabhängig von der Umgebungstemperatur. Dazu werden die mindestens zwei Elektroden (1 und 3) bzw. die gemeinsamen Quellenelektrode (E_q bzw. 3) und deren benachbarten Sensorelektroden (E_n) mit der Stromquelle (6) elektrisch verbunden, so dass der gegebene und bekannte Strom I_q der geregelten Stromquelle (6), der mittels Strommesser (7) als Strom I gemessen wird, so dass über der Isolationsdünnschicht einen Spannungsabfall U bzw. U_n beim mehrdimensionalen Sensor bewirkt, der mittels Spannungsmesser (8) hochaufgelöst gemessen wird und gegenüber einer oder mehreren Referenzmesselektroden (4 bzw. U.ref(n)) unter Anwendung einer Halb- oder Vollmessbrücke als Brückenspannung überführt wird, wodurch eine vollständige Kompensation der Temperaturabhängigkeit des Isolationsdünnschichtwiderstandes bzw. der Messanordnung erreicht wird.

Gegenüber bisher bekannten Lösungen von Kraftmesssensoren und unter anderem im Bezug auf das Patent DE 199 54 164 B4 und DE 10 2006 019 942 A1 ist entgegenzuhalten, dass:
- Sämtliche Kraftmessanordnungen auf der Grundlage piezoresistiver Isolationsdünnschichtsysteme, die im Stand der Technik beschrieben sind, enthalten keine Einrichtung, um die temperaturabhängige Drift des Isolationswiderstandes hochgenau und vollständig zu kompensieren.
- Verschiedenartige Isolationsdünnschichten und Mehrfachschichtsysteme mit Halbleiterverhalten angewandt werden, wobei deren Empfindlichkeit bezogen auf die kraftabhängige elektrische Leitfähigkeit bzw. Elektrischen Widerstand gezielt durch spezielle Herstellungsverfahren, chemische Stoffkombinationen und der Einbringung von Störstellen, die zusätzliche elektrische Ladungsträger freisetzen, die den kraftabhängigen piezoresistiven Effekt erheblich steigern. Beispiele für solche Isolationsdünnschichten bzw. Isolationsdünnschichtkombinationen sind Aluminium- Titan-Nitrit, Aluminium-Chrom-Nitrit, Zirkonium-Oxid-Nitrit oder Aluminium-Chrom- Nitrit-Oxid und viele weitere, die als Halbleiter eine starke Empfindlichkeit der kraftabhängigen Widerstandsänderung aufweisen.
- Die mechanischen Kraftübertragungselemente sind hinsichtlich Geometrie und Materialauswahl so gestaltet, dass keine Geometrieänderung oder vernachlässigbare Verformung der mechanischen Kraftübertragungselemente stattfindet und somit Kraftmessung ohne Fehler einer Wegänderung oder eines Verfahrweges auf direktem Wege in ein elektrisch messbares Signal überführt wird, d.h. das einzige Sensor-Koppel-Glied ist die Isolationsdünnschicht und weitere Bauteiltoleranzen und mechanische Störungen fließen in der Messkette nicht ein.
- Weiterhin werden beispielsweise in der Sensorausführung mit Hartmetall-Kraftübertragungselementen als Elektroden (1 und 3) elektrisch exakt definierte Übergangswiderstände zwischen den Grenzflächen der Metallelektroden (1 und 3) erreicht, deren Übergangswiderstand im Milliohm-Bereich exakt konstant ist, unabhängig von der einwirkenden Kraft, unter der diese Elemente zusammengepresst werden.
- Die beliebige auch miniaturisierte Ausführung der Kraftmesssensoren oder Kraftmess-Sensor-Kombinationen als mehrdimensionale Kraftmesseinheit ermöglicht eine extrem schnelle und hochauflösende Messeinheit, wobei die physikalischen Grenzen dieses Systems ausschließlich elektrisch durch die Umladezeiten der Messströme bzw. Spannungsänderungen des Messkreises bis hin zum Analog-Digital-Wandler begrenzt werden. Moderne elektronische Signalverstärkungs- und -Verarbeitungsschaltungen erschließen hierbei eine bisher nicht gekannte Leistungsklasse in der dynamischen Kraftmessung.
- Je nach gewählter Isolationsdünnschicht bzw. Mehrfach-Isolationsdünnschichtsystem und deren Materialzusammensetzung und entsprechend robusten Kraftübertragungselementen wird eine bisher nicht gekannte Temperaturfestigkeit solcher Sensoren im Bereich von unter hundert Grad Celsius bis 1200 Grad Celsius möglich.
- Energiesparende Anwendungen und sehr kostengünstige miniaturisierte Kraftmesssysteme mit Batteriebetrieb über mehrere Jahre werden möglich, da die Messströme nur kurzzeitig im Aktiv-Schlaf-Betrieb mit extrem langen Ruhephasen geschaltet werden können, wobei sehr kurze Einschwingphasen des Messsystems eine sehr kurze Aktiv-Dauer ermöglichen.
- Die mechanische Robustheit und Verschleißfestigkeit der Isolationsdünnschicht liegt über der Belastungsgrenze der mechanischen Koppelelemente, beispielsweise bei Hartmetall über 2 Gigapascal Druckfestigkeit.

Die vielfältige Gestaltungsmöglichkeit verbunden mit dem sehr hohen Freiheitsgrad hinsichtlich Miniaturisierung, normalen Baugrößen bei mechanischen Standardelementen, z.B. Verbindungselemente wie Bolzen, Schrauben, Druckscheiben etc. bis hin zu Anwendungen im Schwermaschinenbau ist durch diese Messtechnologie mittels Isolationsdünnschichten möglich.

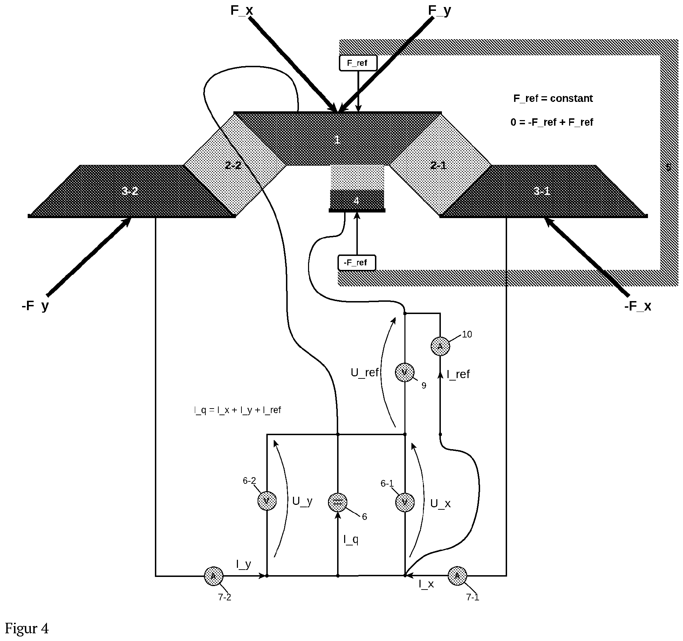

Das Ausführungsbeispiel in Figur 4 unten zeigt als Schnittdarstellung die Kraftmessung in einer Richtung und auf Figur 4 oben die komponentenbezogene Kraftmessung in zwei Richtungen, d.h. im zweidimensionalen Raum (2D) mit den Kraftkomponenten F_x und F_y.

Im weiteren Ausführungsbeispiel laut Figur 5 wird ein mehrdimensionaler Sensoraufbau exemplarisch dargestellt, wobei komponentenbezogen im zwei mal vier-dimensionalen Raum aus 4 unterschiedlichen Drehwinkeln im 3D-Raum (F_x + F_y) eine elektrische Kraftmessung erfolgt. Diese elektrische Messschaltung und der gewählte Sensoraufbau wird als Schnittdarstellung gezeigt, wobei beliebig viele rotatorisch anzufügende (n-) Sensorelemente zusammengesetzt werden können, jedoch hier im konkreten Beispiel n=4 separate Einheiten für 4 Drehwinkel bestimmt sind, soll exemplarisch die Gestaltungsfreiheit hinsichtlich mechanischer Konstruktion und elektronischer Auswertemöglichkeiten aufzeigen.

### Legendenbeschriftung

(1) Elektrode bzw. Gemeinsame Elektrode bei mehrdimensionalen Messzellen
(2) Isolationsdünnschicht [beim mehrdimensionalen Aufbau 2-n bzw. 2.n], d.h. die n-te Isolationsdünnschicht
(3) Elektrode bzw. N-te Elektrode bei mehrdimensionalen Sensoren [beim mehrdimensionalen Aufbau 3-n bzw. 3.n]
(4) Referenzmetallelektrode bzw. N-te Elektrode bei mehrdimensionalen Sensoren
   [beim mehrdimensionalen Aufbau 4-n bzw. 4.n]
(5) Halterung für Referenzmetallelektrode, die mit konstanter Haltekraft aus beiden gegenüberliegenden Richtungen unter konstanter Haltekraft die Referenzmetallelektrode fixiert.
(6) Stromquelle I_q
(7) Strommesser I bzw. bei mehrdimensionaler Ausführung N-ter Strommesser der jeweiligen Kraftkomponente (-richtung) und des zugeordneten N-ten Strommesskanals.
(8) Spannungsmesser U bzw. U_n - bei mehrdimensionaler Ausführung N-ter Spannungsmesser der jeweiligen Kraftkomponente (-richtung) und des zugeordneten N-ten Spannungsmesskanals [beim mehrdimensionalen Aufbau 8- n bzw. 8.n].
(9) Referenzspannungsmesser U_ref bzw. U_ref-m - bei mehrdimensionaler Ausführung M-ter Spannungsmesser der jeweiligen Kraftkomponente (-richtung) und des zugeordneten M-ten Referenzspannungsmesskanals [beim mehrdimensionalen Aufbau 9-m bzw. 9.m].
(10) Referenzstrommesser l_ref bzw. I_ref-m - bei mehrdimensionaler Ausführung M-ter Referenzstrommesser der jeweiligen Kraftkomponente (-richtung) und des zugeordneten M-ten Referenzstrommesskanals [beim mehrdimensionalen Aufbau 9-m bzw. 9.m].
(11) Festwiderstand R_1 = constant der Halbmessbrücke.
(12) Festwiderstand R_2 = constant der Halbmessbrücke.
(13) Isolationsschichtwiderstand R_1 der Vollmessbrücke
(14) Isolationsreferenzwiderstand R_ref-1 der Vollmessbrücke
(15) Isolationswiderstand R_2 der Vollmessbrücke
(16) Isolationsreferenzwiderstand R ref-2 der Vollmessbrücke
(17) Isolationsschichtwiderstand R_17 zwischen den beiden aufeinandergesetzten Messzellen, damit die Vollmessbrückenschaltung möglich wird. [R_ >= 500 * R_1]

## Patentansprüche

1. Einrichtung zum elektrischen Messen einer Kraft (F), umfassend:
- eine Kraftmesszelle mit
∘ einer ersten Metallelektrode (1) und einer dieser in Richtung der zu messenden Kraft (F) gegenüberliegenden zweiten Metallelektrode (3), die jeweils aus Hartmetall, Stahl oder niederohmigen Metallschichten auf Keramik-, Glas- oder Kunststoffkörpern bestehen und Kontaktflächen besitzen, über welche die zu messende Kraft (F) einprägbar ist und die einen elektrischen Widerstand im Bereich weniger Milliohm bis kleiner gleich zehn Ohm sowie eine mittlere Rautiefe (Rₐ) kleiner gleich 400 Nanometer aufweisen, zur Ausbildung einer kraftunabhängigen Leitfähigkeit,
∘ einer Isolationsdünnschicht (2), die zwischen den Metallelektroden (1, 3) formschlüssig angeordnet ist und die aus einem Material besteht, welches ausgewählt ist aus der Gruppe:
▪ Zinkoxid,
▪ stochastisch reduziertes Aluminumoxid Al₂Oₓ mit x = 2.4 bis 2.8,
▪ Siliziumkarbid,
▪ DLC-Schicht [diamond like carbon],
∘ einer Referenzmetallelektrode (4), die kraftentkoppelt von der ersten Metallelektrode (1) auf einem Abschnitt der Isolationsdünnschicht (2) angeordnet ist und durch ein Befestigungselement (5) mit konstanter Haltekraft gegenüber der zweiten Metallelektrode (3) verspannt ist;
- eine Messschaltung, die als Halbbrücke oder Vollbrücke aufgebaut ist, wobei
∘ ein von einer Stromquelle (6) gespeister Strompfad in Reihenschaltung über die erste Metallelektrode (1), die Isolationsdünnschicht (2) zur zweiten Metallelektrode (3), weiter über die Isolationsdünnschicht (2) zur Referenzmetallelektrode (4)verläuft,
∘ eine kraftabhängige Spannung (8) zwischen der ersten Metallelektrode (1) und der zweiten Metallelektrode (3) abgegriffen wird, die über der Isolationsdünnschicht (2) abfällt,
∘ eine Referenzspannung (9) zwischen der zweiten Metallelektrode (3) und Referenzmetallelektrode (4) abgegriffen wird,
∘ die Messschaltung aus der kraftabhängige Spannung (8) und der Referenzspannung (9) ein Spannungsverhältnis bildet, welches einen Wert der eingeprägten Kraft darstellt.

2. Einrichtung nach Anspruch 1, **dadurch gekennzeichnet, dass** die Isolationsdünnschicht (2) als eine Mehrlagenisolationsdünnschicht (2) ausgebildet ist.

3. Einrichtung nach Anspruch 1 oder 2, **dadurch gekennzeichnet, dass** die Kontaktflächen der ersten und zweiten Metallelektroden (1, 3) ein Formschluss im Bereich kleiner 4 Mikrometer über die gesamte Kontaktfläche ausgebildet ist.

4. Einrichtung nach einem oder mehreren der Ansprüche 1 bis 3, **dadurch gekennzeichnet, dass** die erste Metallelektrode (1), die zweite Metallelektrode (3) und die Referenzmetallelektrode (4) mindestens eine gleiche oder größere Festigkeit als die Isolationsdünnschicht (2) aufweisen.

5. Einrichtung nach einem oder mehreren der Ansprüche 1 bis 4, **dadurch gekennzeichnet, dass** zwischen der Messschaltung und der Kraftmesszelle ein räumlicher Abstand kleiner gleich 200 Millimeter besteht.

6. Einrichtung nach einem oder mehreren der Ansprüche 1 bis 5, **dadurch gekennzeichnet, dass** die mittlere Rautiefe Rₐ der Kontaktflächen der ersten Metallelektrode (1) und der Referenzmetallelektrode (4) im Verhältnis 30:1 bis 2:1 rauher sind gegenüber der mittleren Rautiefe der Kontaktfläche der zweiten Metallelektrode (3), die eine mittleren Rautiefe von Rₐ gleich oder kleiner 200 Nanometer aufweist.

7. Einrichtung nach einem oder mehreren der Ansprüche 1 bis 6, **dadurch gekennzeichnet, dass** mehrere Referenzmetallelektroden (4) an der Kraftmesszelle vorgesehen sind.

8. Einrichtung nach einem oder mehreren der Ansprüche 1 bis 7, **dadurch gekennzeichnet, dass** sie eine zweite Kraftmesszelle desselben Aufbaus umfasst, die in Richtung einer störenden Kraftkomponente positionierbar ist.

9. Einrichtung nach einem oder mehreren der Ansprüche 1 bis 8, **dadurch gekennzeichnet, dass** die Kraftmesszelle mehrere Isolationsdünnschichten (2.1, 2.2) aufweist, die elektrisch mehreren Messschaltungen zugeordnet sind und deren räumliche oder geometrische Anordnung so ausgelegt ist, dass die zu messenden Kräfte als vektorielle Größe in Betrag und Richtung zeitgleich erfasst werden.

10. Einrichtung nach einem oder mehreren der Ansprüche 1 bis 9, **dadurch gekennzeichnet, dass** die Metallelektroden (1, 3) und die Referenzmetallelektrode (4) als zusammensteckbare Körper frei wählbarer Regelgeometrien als Positiv- und Negativform gefertigt sind.

11. Einrichtung nach Anspruch 10, **dadurch gekennzeichnet, dass** die zusammensteckbaren Körper ausgewählt sind aus der folgenden Gruppe:
- gebildet als Innenkegelstumpf und Außenkegelstumpf mit formgleichen Mantelflächen gebildet sind, wobei auf den Mantelfläche die Isolationsdünnschicht (2) aufgebracht ist,
- gebildet als ineinander gesetzte Zylinderflächen von Außen- und Innenzylinder mit aufgebrachten Isolationsdünnschichten auf der Zylindermantelfläche, wobei die Isolationsdünnschicht (2) auf die Stirnfläche der Zylinderringe aufgebracht ist.

12. Einrichtung nach einem oder mehreren der Ansprüche 1 bis 11 **dadurch gekennzeichnet, dass** die Isolationsdünnschicht (2) auf der Umfangsfläche von zwei miteinander verbundenen Kegelstümpfen auf der Außenfläche der jeweils inneren Elektrode angeordnet ist, die gegenüber einer passgenauen Einhausung aus zwei elektrisch voneinander isolierten äußeren Elektroden als Negativform montiert sind.

13. Einrichtung nach einem oder mehreren der Ansprüche 1 bis 12, **dadurch gekennzeichnet, dass** als Stromquelle (6) ein elektronischer Signalgenerator dient, der in einem ersten Betriebsmodus als geregelte Gleichstromquelle oder in einem zweiten Betriebsmodus als Wechselstromsignalquelle arbeitet, und dass weiterhin die Messschaltung auf den jeweiligen Betriebsmodus einstellbar ist.

14. Einrichtung nach einem oder mehreren der Ansprüche 1 bis 13, **dadurch gekennzeichnet, dass** mechanische Übertragungselemente zur Kraftweiterleitung auf die Metallelektroden (1, 3) und die Referenzmetallelektrode (4) vorgesehen sind, gebildet als Formteile aus festen Kunststoffen oder hochfesten Verbundwerkstoffen.

15. Einrichtung nach einem oder mehreren der Ansprüche 1 bis 14, **dadurch gekennzeichnet, dass** die Messschaltung weiterhin Bandstoppfilter oder Bandpassfilter umfasst.

## Claims

1. Device for electrically measuring a force (F) comprising:
- a load cell comprising
∘ a first metal electrode (1) and a second metal electrode (3) disposed opposite thereof in the direction of the force (F) to be measured, each being made of hard metal, steel or low-resistance metal layers on ceramic, glass or plastic bodies and having contact surfaces by way of which the force (F) to be measured can be impressed, and having electrical resistance in the range of a few milliohms to less than or equal to ten ohms and a mean roughness value (Rₐ) of less than or equal to 400 nanometers, for forming force-independent conductivity,
∘ a thin insulating film (2), which is disposed between the metal electrodes (1, 3) in a form-locked manner and made of a material selected from the group consisting of:
▪ zinc oxide,
▪ stochastically reduced aluminum oxide Al₂Oₓ where x = 2.4 to 2.8,
▪ silicon carbide,
▪ a DLC layer (diamond-like carbon),
∘ a reference metal electrode (4), which is disposed on a section of the thin insulating film (2) in a manner that is force-decoupled from the first metal electrode (1) and tensioned with respect to the second metal electrode (3) at a constant retaining force by a fastening element (5);
- a measuring circuit designed as a half bridge or a full bridge, wherein
∘ a current path fed from a power source (6) in a series connection runs across the first metal electrode (1), the thin insulating layer (2) to the second metal electrode (3), and onward across the thin insulating layer (2) to the reference metal electrode (4),
∘ a force-dependent voltage (8) is tapped between the first metal electrode (1) and the second metal electrode (3), the voltage dropping across the thin insulating film (2),
∘ a reference voltage (9) is tapped between the second metal electrode (3) and the reference metal electrode (4),
∘ the measuring circuit forms a voltage ratio from the force-dependent voltage (8) and the reference voltage (9), the voltage ratio representing a value of the impressed force.

2. Device according to claim 1, **characterized in that** the thin insulating film (2) is designed as a thin multi-layer insulating film (2).

3. Device according to claim 1 or 2, **characterized in that** the contact surfaces of the first and second metal electrodes (1, 3) is designed a form fit in the range of less than 4 micrometers across the entire contact surface.

4. Device according to one or more of claims 1 to 3, **characterized in that** the first metal electrode (1), the second metal electrode (3) and the reference metal electrode (4) have at least the same strength as, or greater strength than, the thin insulating film (2).

5. Device according to one or more of claims 1 to 4, **characterized in that** a spatial distance of less than or equal to 200 millimeters exists between the measuring circuit and the load cell.

6. Device according to one or more of claims 1 to 5, **characterized in that** the mean roughness value Rₐ of the contact surfaces of the first metal electrode (1) and of the reference metal electrode (4) are rougher at a ratio of 30:1 to 2:1 compared to the mean roughness value of the contact surface of the second metal electrode (3), which has a mean roughness value Rₐ of less than or equal to 200 nanometers.

7. Device according to one or more of claims 1 to 6, **characterized in that** multiple reference metal electrodes (4) are provided on the load cell.

8. Device according to one or more of claims 1 to 7, **characterized by** comprising a second load cell having the same design, which can be positioned in the direction of an interfering force component.

9. Device according to one or more of claims 1 to 8, **characterized in that** the load cell comprises a plurality of thin insulating films (2.1, 2.2), which electrically are associated with a plurality of measuring circuits, and the spatial or geometry arrangement is designed in such a way that the magnitude and direction of the forces to be measured are simultaneously detected as a vector quantity.

10. Device according to one or more of claims 1 to 9, **characterized in that** the metal electrodes (1, 3) and the reference metal electrode (4) are manufactured as insertable bodies having freely selectable ruled geometries as positive and negative shapes.

11. Device according to claim 10, **characterized in that** the insertable bodies are selected from the following group:
- designed as an inside truncated cone and an outside truncated cone comprising lateral surfaces having the same shape, the thin insulating film (2) being applied to the lateral surface;
- designed as cylinder surfaces, inserted into one another, of the outer cylinder and inner cylinder having thin insulating films applied to the cylinder lateral surface, the thin insulating film (2) being applied to the end face of the cylinder rings.

12. Device according to one or more of claims 1 to 11, **characterized in that** the thin insulating film (2) is applied to the circumferential surface of two mutually connected truncated cones on the outer surface of the respective inner electrode, which are mounted respect to a precisely fitting casing made of two outer electrodes that are electrically insulated from one another as a negative shape.

13. Device according to one or more of claims 1 to 12, **characterized in that** an electronic signal generator is used as the power source (6), which in a first operating mode operates as a regulated direct current source or in a second operating mode as an alternating current signal source, and that furthermore the measuring circuit can be set to the respective operating mode.

14. Device according to one or more of claims 1 to 13, **characterized in that** mechanical transmission elements for passing on the force to the metal electrodes (1, 3) and the reference metal electrode (4) are provided, which are designed as shaped parts made of strong plastic materials or high-strength composite materials.

15. Device according to one or more of claims 1 to 14, **characterized in that** the measuring circuit furthermore comprises band stop filters or band pass filters.

## Revendications

1. Dispositif pour la mesure électrique d'une force (F), comprenant :
- une cellule dynamométrique avec
∘ une première électrode métallique (1) et une deuxième électrode métallique (3) opposée à celle-ci en direction de la force (F) à mesurer, qui sont respectivement en métal dur, acier ou couches métalliques à faible valeur ohmique sur des corps de céramique, de verre ou de matière plastique et possèdent des surfaces de contact par le biais desquelles la force à mesurer (F) peut être appliquée et qui comportent une résistance électrique de l'ordre de moins d'un milliohm jusqu'à plus petite égale à dix Ohm ainsi qu'une profondeur de rugosité moyenne (Ra) plus petite égale à 400 Nanomètres pour la formation d'une conductibilité indépendante de la force,
∘ une couche d'isolation (2), qui est disposée par conformité de forme entre les électrodes métalliques (1, 3) et qui est dans un matériau, lequel est choisi parmi le groupe :
• oxyde de zinc,
• oxyde d'aluminium stochastiquement réduit Al₂Oₓ avec x = 2,4 à 2,8,
• carbure de silicium,
• couche de carbone adamantin
∘ une électrode métallique de référence (4), qui est disposée couplée par force par la première électrode métallique (1) sur une section de la couche mince d'isolation (2) et est serrée par un élément de fixation (5) avec une force de maintien constante par rapport à la deuxième électrode métallique (3),
- un circuit de mesure, qui est structuré comme demi-pont ou pont complet,
∘ un trajet de courant alimenté par une source de courant (6), connecté en série passant par la première électrode métallique (1), la couche mince d'isolation (2) vers la deuxième électrode métallique (3), et plus loin par la couche mince d'isolation (2) vers l'électrode métallique de référence (4),
∘ une tension dépendant de la force (8) étant prélevée entre la première électrode métallique (1) et la deuxième électrode métallique (3), qui diminue par le biais de la couche mince d'isolation (2),
∘ une tension de référence (9) étant prélevée entre la deuxième électrode (3) et l'électrode métallique de référence (4),
∘ le circuit de mesure formant un rapport de tension à partir de la tension dépendant de la force (8) et de la tension de référence (9), lequel représente une valeur de la force empreinte.

2. Dispositif selon la revendication 1, **caractérisé en ce que** la couche mince d'isolation (2) est constituée comme une couche mince d'isolation multicouches (2).

3. Dispositif selon la revendication 1 ou 2, **caractérisé en ce que** les surfaces de contact des première et deuxième électrodes métalliques (1, 3) constituent une fermeture géométrique d'un ordre inférieure à 4 microns sur toute la surface de contact.

4. Dispositif selon l'une quelconque ou plusieurs des revendications 1 à 3, **caractérisé en ce que** la première électrode métallique (1), la deuxième électrode métallique (3) et l'électrode métallique de référence (4) comportent au moins une résistance identique ou supérieure à celle de la couche mince d'isolation (2).

5. Dispositif selon l'une quelconque ou plusieurs des revendications 1 à 4, **caractérisé en ce qu'**entre le circuit de mesure et la cellule dynamométrique il y a un distance spatiale inférieure à 200 millimètres.

6. Dispositif selon l'une quelconque ou plusieurs des revendications 1 à 5, **caractérisé en ce que** la profondeur de rugosité moyenne Rₐ des surfaces de contact de la première électrode métallique (1) et de l'électrode métallique de référence (4) sont plus rugueuses dans un rapport de 30:1 à 2:1 par rapport à la profondeur de rugosité moyenne de la surface de contact de la deuxième électrode métallique (3), qui comporte une profondeur de rugosité moyenne de Ra égale ou inférieure à 200 nanomètres.

7. Dispositif selon l'une quelconque ou plusieurs des revendications 1 à 6, **caractérisé en ce que** plusieurs électrodes métalliques de référence (4) sont prévues sur la cellule dynamométrique.

8. Dispositif selon l'une quelconque ou plusieurs des revendications 1 à 7, **caractérisé en ce qu'**il comprend une deuxième cellule dynamométrique de même structure qui peut être positionnée en direction d'une composante de force perturbatrice.

9. Dispositif selon l'une quelconque ou plusieurs des revendications 1 à 8, **caractérisé en ce que** la cellule dynamométrique comporte plusieurs couches minces d'isolation (2.1, 2.2), qui sont attribuées électriquement à plusieurs circuits de mesure et dont la disposition spatiale ou géométrique est conçue de telle manière que les forces à mesurer sont saisies chroniquement en importance et direction en tant que grandeurs vectorielles.

10. Dispositif selon l'une quelconque ou plusieurs des revendications 1 à 9, **caractérisé en ce que** les électrodes métalliques (1, 3) et l'électrode métallique de référence (4) sont fabriquées sous la forme de corps connectables ensemble de géométries normales librement sélectionnables en tant que forme positive et négative.

11. Dispositif selon la revendication 10, **caractérisé en ce que** les corps connectables ensemble sont choisis parmi le groupe suivant :
- formés en tant que tronc de cône intérieur et tronc de cône extérieur avec des surfaces d'enveloppe de même forme, la couche mince d'isolation (2) étant appliquée sur la surface d'enveloppe,
- formés en tant que surfaces cylindriques mises l'une dans l'autre de cylindres extérieurs et intérieurs avec des couches minces d'isolation appliquées sur la surface d'enveloppe cylindrique, la couche mince d'isolation (2) étant appliquée sur la surface avant des anneaux cylindriques.

12. Dispositif selon l'une quelconque ou plusieurs des revendications 1 à 11, **caractérisé en ce que** la couche mince d'isolation (2) est disposée sur la surface périphérique de deux troncs de cône reliés entre eux sur la surface extérieure des électrodes respectivement intérieures qui sont montées par rapport à un boîtier adapté de deux électrodes extérieures électriquement isolées l'une de l'autre en tant que forme négative.

13. Dispositif selon l'une quelconque ou plusieurs des revendications 1 à 12, **caractérisé en ce qu'**un générateur électrique de signaux sert de source de courant (6), qui fonctionne dans un premier mode de fonctionnement en tant que source de courant continu régulé ou dans un deuxième mode de fonctionnement en tant que source de courant alternatif et **en ce que** le circuit de mesure peut être en plus réglé sur le mode de fonctionnement respectif.

14. Dispositif selon l'une quelconque ou plusieurs des revendications 1 à 13, **caractérisé en ce que** des éléments de transmission mécaniques sont prévus pour la transmission de force aux électrodes métalliques (1, 3) et à l'électrode métallique de référence (4), formés en tant que pièces moulées à partir de matières plastiques solides ou matériaux composites très solides.

15. Dispositif selon l'une quelconque ou plusieurs des revendications 1 à 14, **caractérisé en ce que** le circuit de mesure comprend en plus un filtre d'arrêt de bande ou filtre passe bande.
